# EUROPEAN PATENT APPLICATION

(11) **EP 1 136 919 A2**
(43) Date of publication of application: **26.09.2001**
(21) Application number: 00305785.8
(22) Date of filing: 07.07.2000
(51) Int. Cl.: G06F 17/50, G06F 17/60

(54) **A constructional actual cost calculation system**

(30) Priority: 24.03.2000 JP 2000084412
(71) Applicant: Original Engineering Consultants Co., Ltd., Shinjuku-ku, Tokyo (JP)
(72) Inventor: Suga, Osamu, Shin-Ogawamachi Shinjuku-ku Tokyo (JP)
(74) Representative: Phillips, Patricia Marie

(57) **Abstract**

The present invention provides a construction actual cost calculation system comprising:
an application service provider (ASP) comprising a construction design system comprising a 3-D structure design system for grasping a construction such as a building or the like as a 3-D structure from the beginning with a 3-D CAD design means to design the building and construction direct cost calculating means for calculating an optimal construction actual cost by detecting a construction material of the building and the quantity thereof by each kind of the material and comparing the detected data with general data accumulated by each of the items; and an integrated construction information management system for comparing the design data of the building with the building design system with the most recent construction material information data, human resource information data, and the physical distribution information data or the like obtained by the internet service provider (ISP) to calculate the optimal construction actual cost;
wherein steps from the construction design up to the start of the execution thereof is shorted in the length of the period, and a unit cost information on the construction material which information has been made clear is obtained thereby enabling the detection and acquisition of the construction actual cost.

## Description

### BACKGROUND OF THE INVENTION .

### 1. Field of the Invention

The present invention relates to a system for providing application software service associated with construction. The present invention relates to the provision of technical knowledge information for detecting the actual cost of a building to users through a communication network on the basis of the design of the building and a quantity calculation thereof as well as construction materials and human resources information provided by an internet service provider (ISP) and to a business model patent for providing a system which enables the unilateral control of the building in a process from the stage of the design of the building to the stage of the procurement of the construction materials.

### 2. Description of the Prior Art

Conventionally, the design of buildings which consist of a floor, a wall and a ceiling is limited to a level of inputting data with the 2-D CAD system, preparing and drawing out a detailed design drawing with the 2-D CAD system or in a manual work, and picking up and performing each kind of quantity calculation from the drawn out drawings. The construction materials and the quantity thereof are developed and proposed irrespective of the design of the buildings in many cases.

However, there is a problem in that the provision of the construction technique, the construction material and the quantity thereof is individual, and the construction materials are not linked to each other as described above with the result that the design of the building and the procurement step of the construction materials becomes complicated.

Furthermore, there is a problem in that the complexity of the procurement channel leads to an increase in the construction cost, and a delay in the procurement of the construction materials.

Still furthermore, there is a problem in that the construction materials of versatile kinds are given, and an area characteristic is conspicuous with the result that the price becomes unclear.

There is a problem in that the background which has been described above impedes the globalization of the construction business, and the improvement in the quality thereof, prevents the selection and the procurement of the standards of the construction business, single materials or combined materials soon at an inexpensive cost, thereby creating an environment which impedes the free participation of traders (concerned with production, sales and delivery thereof) who provides the construction materials in the provision of the construction materials.

### SUMMARY OF THE INVENTION

The present invention uses a system for automatically searching the quantity calculation of the construction materials from a 3-D CAD design drawing provided by an application service provider, inputs building information, establishes a system for searching an estimated cost, acquires construction material information data, acquires physical distribution information data of the construction materials, acquires human resources information, prepares estimated prime cost, performs the management of steps, performs the technical quality control, searches the actual cost of the buildings, searches the integrated construction work prime cost of the buildings, and performs each trade of the construction materials and the human resources on the basis of the schedule of the start of the construction of the buildings. A complicated construction technique and the calculation of the construction materials and the quantity thereof are automated to settle the problem of the complicated design of the buildings and the procurement of the construction materials by the combination of the technique and the internet information, the problem of an increase in the cost is settled which is caused by the unclear prices derived from the versatility of the construction materials and area characteristic and by the complicated procurement channel. Furthermore, the problem of a delay in the procurement of the construction materials is settled thereby contributing to the early determination of the delivery and the shortened construction period and promoting the collection of technical information in preparation for the globalization of the construction business. At the same time, a problem which impedes the improvement in the quality is settled with technical information obtained through the internet with the result that the standard of the construction business, single materials and combined materials can be soon selected at inexpensive cost. Then, the problem which prevents traders (concerned with production, sales and delivery) of the construction materials from participating in the competition including overseas trade is settled by using the internet service provider to get rid of the area characteristic in such a manner that the traders can participate in the competition.

Other features and advantages of the invention will become apparent from the following description and the attached drawings where in:

### BRIEF DESCRIPTION OF THE DRAWINGS

Fig. 1 is a view showing main items which constitutes a system for calculating the construction actual cost according to the present invention.
Fig. 2 is a view for explaining a usage of the system according to the present invention.
Fig. 3 is a view for explaining a detail of the ASP and the ISP according to the present invention.
Fig. 4 is an overall flow view of the present invention.
Fig. 5 is a view showing a flow of the building information within Fig. 4.
Fig. 6 is a view showing a flow of the building prime cost management within Fig. 4.
Fig. 7 is a view showing a flow of the physical distribution within Fig. 6.
Fig. 8 is a view showing a flow of the human resources information within Fig. 6.
Fig. 9 is a view showing a flow of order information within Fig. 6.

### DESCRIPTION OF THE PREFERRED EMBODIMENT

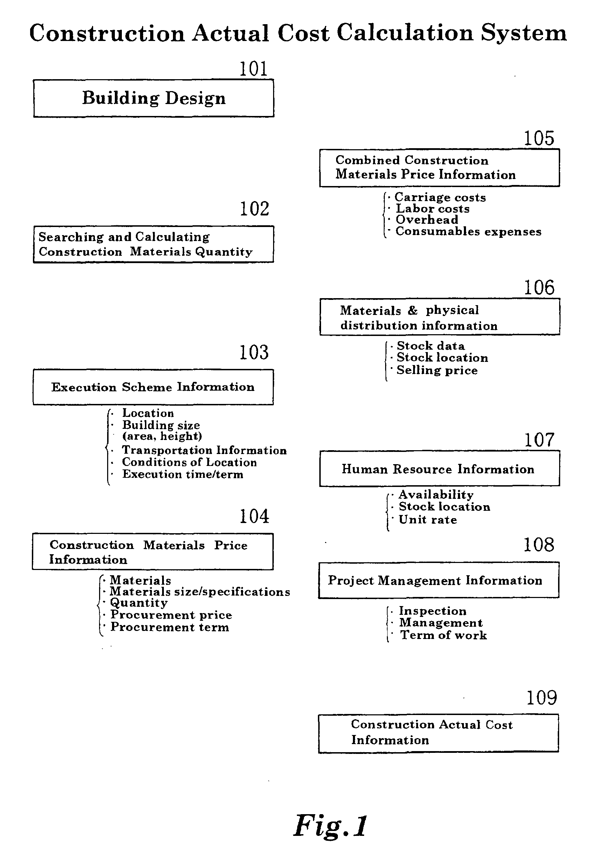

A construction actual cost search system according to the present invention is constituted in a process shown in Fig. 1.

In other words, the building design is performed by using a 3-D CAD design means in an order starting from a basic concept to a conceptual design, an inspection and a detailed design in this order. (Step 101)

After the completion of the above design, the construction materials and the quantity thereof are searched for each kind of construction work from the 3-D CAD design data. (Step 102)

The execution plan and the transportation plan of the above building are made on the basis of the conditions of location set-up from the stage of the basic concept.(Step 103)

The procurement price is determined from the kind, the standard, the specifications, the physical quantity, and the procurement period on the basis of the above construction material and the search of the quantity thereof. (Step 104)

Information is determined with respect to the carriage cost for the transportation, required for the procurement of the above construction material, the labor cost and the overhead for the execution of construction as well as the consumables expenses. (Step 105)

The stock price and the quantity of the above construction materials and the sales cost thereof are allowed to be input by the trader on the internet, so that most recent information thereof can be obtained. (Step 106)

The stock price and the quantity of the above construction materials and the unit rate of the human resources for executing the building are allowed to be input by the trader, so that the most recent information thereof can be obtained on the internet. (Step 107)

A framework is made for allowing users to manage the most favorable execution plan on the basis of the building information, the construction materials information, the physical distribution information of the construction material, the human resources information and the like on the internet in the above buildings. (Step 108)

The actual cost of the above building is obtained in the content which is designed with the project management (PM) of the above building. (Step 109)

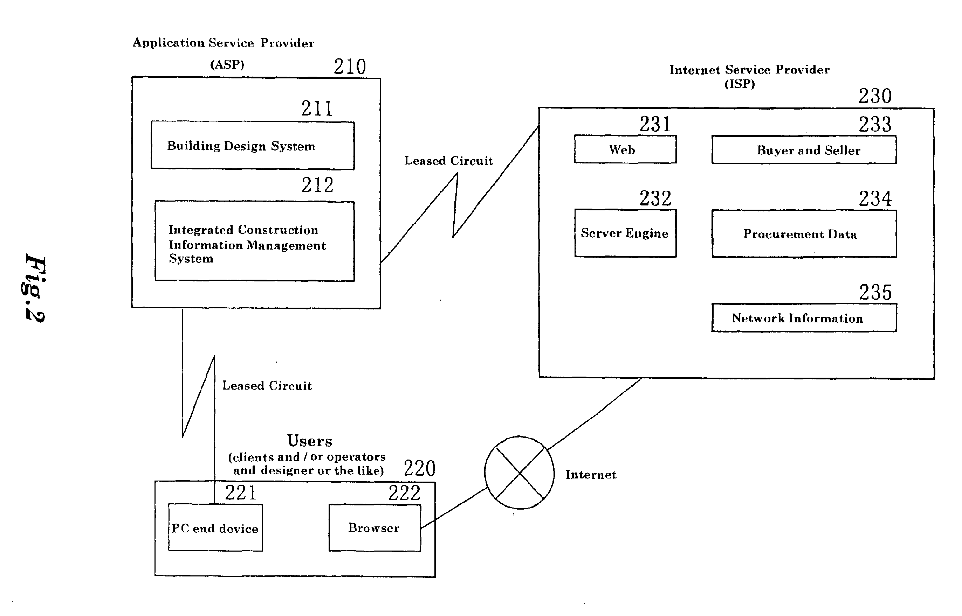

Reference numeral 210 in Fig. 2 denotes a service system provided by the application service provider (ASP). A process from the design of the building up to the automatic quantity calculation is carried out on the intranet. Incidentally, the 3-D structure design system is a design system for designing a concrete-made 3-D structure disclosed in Japanese Patent Application 2000-42855 which is previously applied by the applicant of the present invention, the concrete-made 3-D structure consisting of a floor, a wall and a ceiling. There is used a 3-D structure design system which comprises:
data input means for classifying the whole structure on the basis of the structure characteristics of a structure into each block of several kinds such as a rectangular parallelepiped, a column, a cylinder, a trigonal prism and the like to subsequently input the structure data from the lower block;
3-D structural data search means for searching the result of rivaling between a main member and an auxiliary member on the basis of the characteristic of each block input from the data input means, searching data on equipment and materials by checking each block on the basis of the result of the rivaling between the members, and constituting an appropriate block shape, searching connection data between respective blocks constituting the whole body of the concrete-made structure with data on the equipment and materials, and at the same time, searching data on the area on the overlapped portion with connection data;
body quantities search means for searching each quantity of the concrete-made structure from the data on the 3-D structural data search means and, at the same time, calculating the quantity of concrete forms timbering for each block; and
result output means for displaying and outputting the search result of each of the above means.

Each kind of information on the construction material is handled in a form of general information made public in publications and accumulated in advance so that the information can be retrieved and extracted upon the request of users (clients and / or operators and designers or the like). On the basis of the building information and construction condition information which is obtained above, the most recent construction materials and the human resources information which is input in advance on a web of the internet service provider (ISP), so that a system (management information) is constituted which allows users (clients and / or operators and designers or the like) to compare the information with each other thereby forming a price in an independent manner.
The users can obtain an appropriate price of the building (the optimal prime cost of the building) through this service so that an attempt can be made to form a differentiation which is not conventionally provided. Through the above service, the price of the building (the optimal prime cost of the building) is obtained so that a difference from the conventional general price can be made known.

Reference numeral 230 in Fig. 2 denotes a service system provided by the internet service provider (ISP). Thus, a system is constituted in which physical distribution information and human resources information using the HTML (Hyper Text Markup Language) or the XML (Extensible Markup Language) on the WWW (World Wide Web) can be input. The system is constituted in such a manner that the input of respective items can be freely made under a definite condition.

Furthermore, the system is constituted in such a manner that enterprise information on the company or the manufacturer input on the above WWW can be carried and retrieved on the HP (Home Page). Incidentally, the above physical distribution information and the human resources information are very important so that these items of information are to be managed under a strict security control.

Reference numeral 232 in Fig. 2 denotes a server engine which has a configuration such that the most recent information can be obtained and carried by making use of the RDBMS (Relational Database Management System).

Users (clients and / or operators and designers or the like) 220 can use a system which is provided by the ASP, and can acquire buyer and seller data, procurement data, network information and the like provided by the ISP via the browser 222.

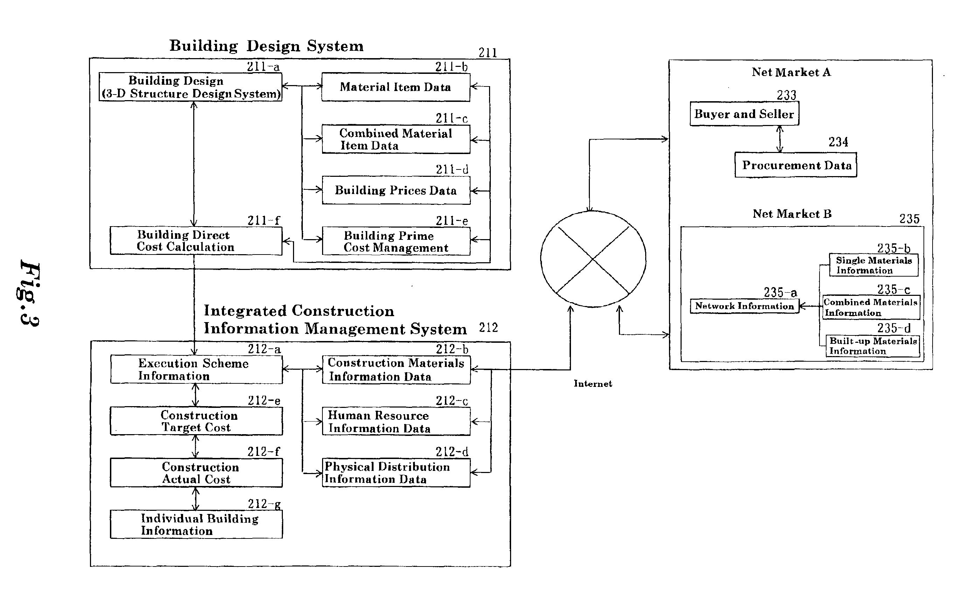

Fig. 3 denotes a building design system 211 provided by the application service provider (ASP), the integrated construction information management system 212, and the details of the service provided by the internet service provider (ISP) and the flow of construction data.

The construction design system 211 makes the building design 211-a to extract the accumulated data for each of the construction material in 211-b through 211-d, the management is performed in 211-e, and the direct construction work cost of the building is calculated (211-f).

Furthermore, the construction actual cost is searched in the integrated construction information management system 212. The execution scheme information of the above building is collected and organized by 212-a, and the construction target cost is calculated (212-e) by obtaining each item of data in 212-b through 212-d. The construction actual cost is determined (212-f). Furthermore, the individual construction information (212-g) is obtained from the above construction actual cost and each of the integrated construction information (212-b through 212-d).

As information of the ISP which can be obtained through the internet, there is available information on the network market A from which the buyer and seller data 233, and the procurement data 234 can be obtained and information on the network market B from which the single materials information 235-b and the built-up materials information 235-d can be obtained as network information.

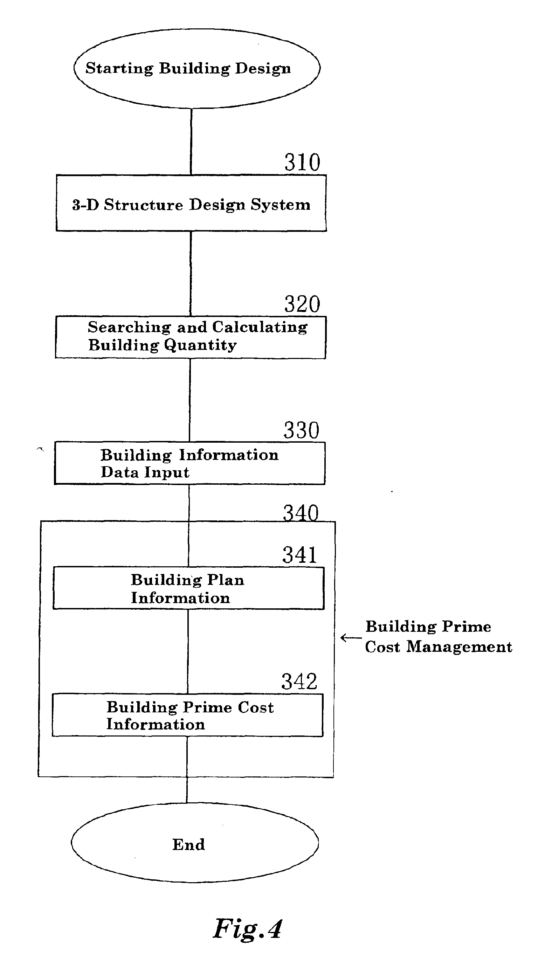

Fig. 4 shows an overall flow in the construction actual cost calculation system according to the present invention. A quantity calculation is performed from the design of the building, and furthermore, a project management (PM) is performed from the input of the building information. In the beginning, the building is designed by making use of the 3-D structure design system 310 provided by the application service provider, and the building quantity searching and calculating means 320 automatically calculates the quantity of the buildings on the basis of the design data. Next, the building information data input means 330 inputs the basic information of the above building information, and processes the information for the management. Reference numeral 340 denotes a building prime cost management system. The system clearly and accurately determines the calculation of the construction cost and the procurement of the construction material which have been so far complicated. The building prime cost management system 340 includes the building plan information means (PM system) 341 for procuring the material and performing the step on the basis of the data of the above information on the building and the building prime cost information means 342 for obtaining the prime cost of the building from the managed data.

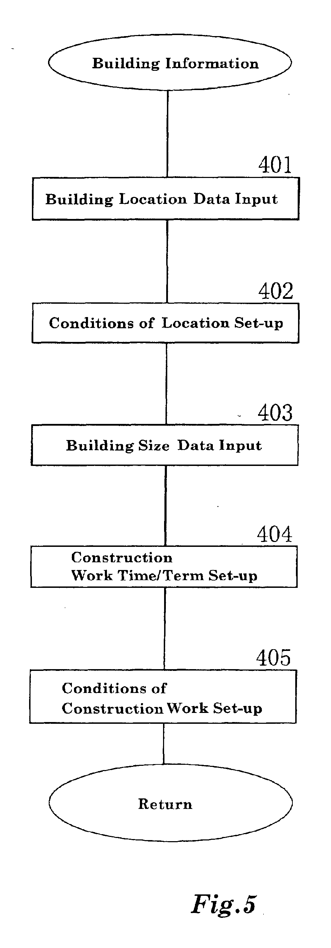

Fig. 5 shows a flow for organizing as one set the building information for the input of the building information in Fig. 4. Means for inputting the building position information confirms the location of the building, and means 402 for setting up the conditions of location set-up. Incidentally, the conditions of the location set-up are set in the following manner:
- Designation of the area and the designation of the altitude in accordance with the city planning law
- Road information around the periphery of the building
- Environment of the area

Next, the building size information input means inputs the building size information, inputs the period and time with means 404 for setting up the construction work time/term on the basis of the step of the construction. Furthermore, the construction condition associated with the building will be set with means 405 for setting up the conditions of the building construction work.

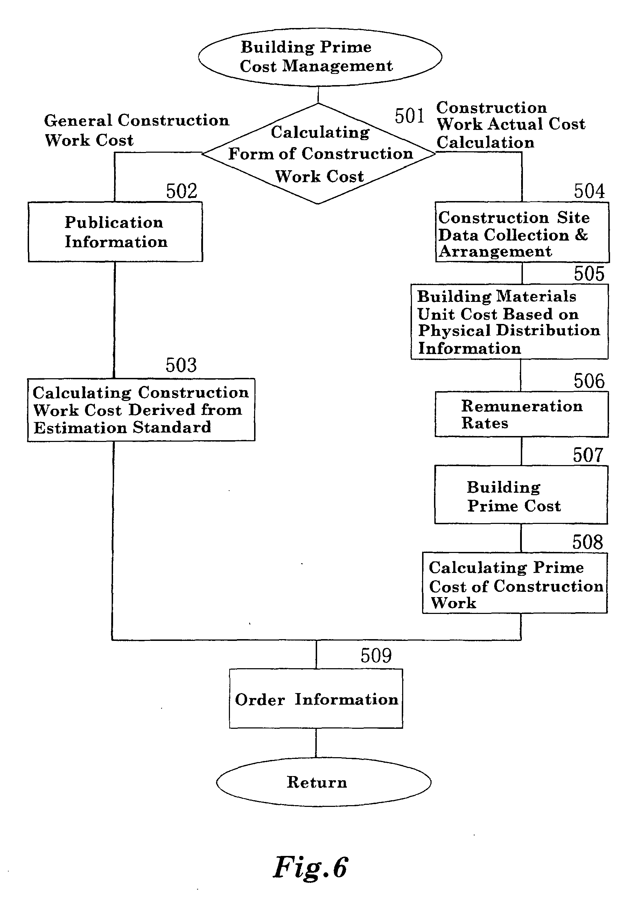

Fig. 6 shows a flow of the building prime cost management. A selection will be made as to whether the calculation form of the construction work cost is made on the general basis, or the actual cost is calculated. In the case of the calculation of the general construction work cost, after the price of commodities in the publication and the estimated cost information in the case of the dedicated construction is obtained which is followed by the calculation of the construction work cost 503 on the basis of the estimation reference. Furthermore, in the case where the construction actual cost is searched, the information 504 on the periphery of the construction site is collected and organized, and then information 505 on the construction material unit cost derived from the physical distribution information controlled and managed by the internet service provider (ISP) so that the building prime cost 507 is searched. Then the calculating the prime cost of construction work 508 is made. Furthermore, the order information 509 which enables the procurement of the material at the time of placing an order of the construction work is made possible by the internet service provider (ISP).

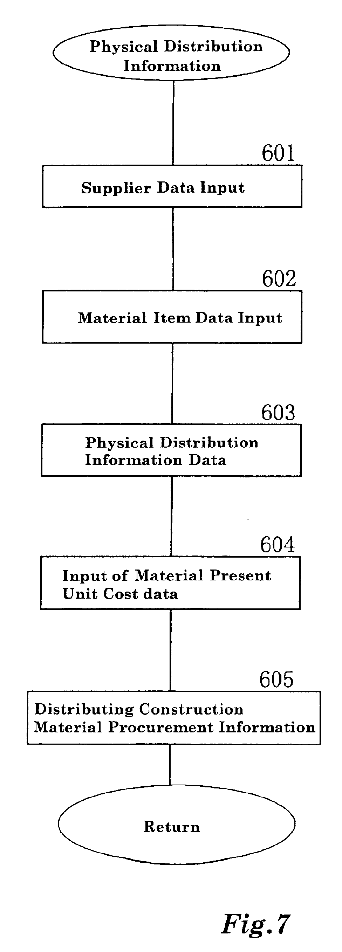

Figs. 7 through 9 show service provided by the internet service provider (ISP). Fig. 7 shows a detail of a system for providing the physical distribution information of the construction to users. The system is constituted to allow the input of the enterprise information associated with all the construction material field through supplier data input 601 of the construction materials, the material item data input 602 of the handled materials (goods) thereof, the input 603 of physical distribution information data thereof, the input 604 of the present unit cost data thereof, and further allows contractors who execute the construction work of the building to retrieve and use data which is disclosed in the disclosure 605 of the construction material procurement information through the ISP.

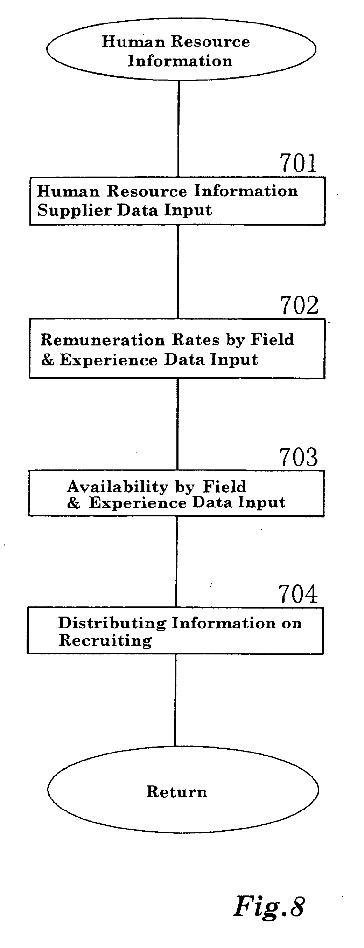

Fig. 8 shows a detail of a system which provides human resources information of the construction work to users when they need such information. The system allows the human resource information supplier data input 701, the remuneration rates by field and experience data input 702 and availability by field and experience data input 703. Furthermore, as can be seen in the previous example, the system enables the contractors who perform the construction work of the building to retrieve and use data disclosed in the distributing information on recruiting 704.

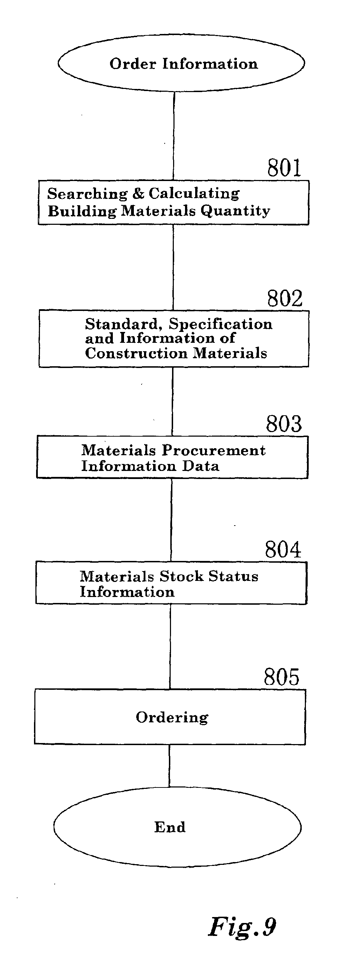

Fig. 9 shows a detail of a system for placing an order of the construction material on the basis of the step which is managed at the stage of the construction work of the building. The system allows the detection of the quantity of the construction material through the construction material quantity searching and calculating 801, the determination of the standard and the specification, and the information 802 of the construction materials, the determination of the procurement period in accordance with the above step with the materials procurement data information 803, the re-examination of the stock quantity of the material with the materials stock status information 804 and the placing of an order for the materials through the ordering 805.

As has been described above, according to the present invention, there is provided a system which allows users (clients and / or operators and designers or the like) who are identified by the application service provider (ASP) to perform a design and an estimation of the construction in a short period of time through steps from the design of the building to the execution. Furthermore, there arises an advantage in that the building actual cost can be accurately and easily searched by obtaining the unit cost information of the construction material which information is made clear.

An accurate kind, a standard, specifications and a physical quantity of construction materials can be obtained by obtaining the construction material information such as CAD data via the ISP from the stage of the design thereof.

According to the present invention, there arises an advantage in that a problem is settled such that an inexpensive and good-quality construction material can be procured by accurately grasping the physical distribution information of the construction material with the result that traders hold a surplus stock of the materials.

There arises an advantage in that the physical distribution information of the construction materials is made clear so that the materials can be obtained at an accurate price and the building actual cost can be easily searched.

There arises an advantage in that an efficient execution free from forcing, waste and irregularity is made possible by making use of the project management (PM) which can place an accurate order of the construction materials on the basis of the work step of the building.

There arises an advantage in that users can largely reduce the overhead compared with the constitution of a unique system by making use of the system according to the present invention via the network and the internet.

There arises an advantage in that a problem of an increase in the construction cost derived from the complexity of the procurement channel of the construction materials can be settled.

There arises an advantage in that the standard and the unit cost of the construction business, and built-up materials are soon selected and procured at an inexpensive cost.

There arises an advantage in that the traders of the construction materials (associated with the production, sales and delivery thereof) can freely participate in the provision of the construction materials including overseas market.

With the constitution described above, there is provided an advantage in that the globalization of the construction business is promoted.

## Claims

1. A construction actual cost calculation system comprising:
an application service provider (ASP) comprising a construction design system comprising a 3-D structure design system for grasping a construction such as a building or the like as a 3-D structure from the beginning with a 3-D CAD design means to design the building and construction direct cost calculating means for calculating an optimal construction actual cost by detecting a construction material of the building and the quantity thereof by each kind of the material and comparing the detected data with general data accumulated by each of the items; and an integrated construction information management system for comparing the design data of the building with the building design system with the most recent construction material information data, human resource information data, and the physical distribution information data or the like obtained by the internet service provider (ISP) to calculate the optimal construction actual cost;
wherein steps from the building design up to the start of the execution thereof is shorted in the length of the period, and a unit cost information on the construction materials which information has been made clear is obtained thereby enabling the detection and acquisition of the construction actual cost.

2. A system according to claim 1, wherein the accumulated data is given as construction material item data, combined construction material item data and construction cost data, and there is provided construction prime cost management means for extracting data by each of the construction materials corresponding to the quantity of each kind of the construction materials searched from these items of data.

3. A system according to claim 1 or 2, wherein the construction prime cost management means is provided with two kinds of construction cost search means for searching the construction cost on the basis of the general reference of the accumulated data and for searching the construction on the basis of the most recent data obtained from the internet service provider (ISP) so that the two values of the construction cost can be compared with each other.

4. A system according to any of claims 1 through 3, wherein the internet service provider (ISP) is provided with order information means for placing an order on the basis of the disclosure of information linked with a network, information including construction materials information, human resource information, and the procurement data thereof and on the basis of the disclosed information.

5. A system according to any of claims 1 through 4, wherein the design work time is shortened by accurately grasping the kind, the standard, the specifications and the physical quantity of the construction materials through the gaining of information on the construction materials such as the CAD data from the design stage via the internet service provider (ISP).

6. A system according to any of claims 1 through 4, wherein inexpensive and good-quality construction materials are procured and unnecessary stock is settled by accurately grasping the physical distribution of the construction materials via the internet.

7. A system according to any of claims 1 through 4, wherein the execution of the construction without intermission based on a work schedule is made possible by providing a project management (PM) means which is capable of placing an order of the construction materials on the basis of the work step of the construction.

8. A system according to claim any of claims 1 through 4, wherein an area gap of the material is corrected with the registration of traders using the internet service provider (ISP), and the globalization of the construction business is promoted through enabling a free participation of the traders.
